# EUROPEAN PATENT APPLICATION

(11) **EP 4 484 907 A1**
(43) Date of publication of application: **01.01.2025**
(21) Application number: 23182006.9
(22) Date of filing: 28.06.2023
(51) Int. Cl.: G01H 3/14, G10K 11/178

(54) **LOCATION-AWARE VEHICLE NOISE CONTROL**

(71) Applicant: INTEL Corporation, Santa Clara, CA 95054 (US)
(72) Inventor: CARRANZA, Marcos, Portland, OR 97229 (US); FELLEISEN, Juergen, 76532 Baden-Baden (DE); GUIM BERNAT, Francesc, Barcelona (ES); KUMAR, Karthik, Chandler, AZ 85249 (US); MOUSTAFA, Hassnaa, San Jose, CA 95123 (US)
(74) Representative: Viering, Jentschura & Partner mbB Patent- und Rechtsanwälte

(57) **Abstract**

Disclosed herein are systems, devices, and methods for real-time motion and path planning. The real-time motion and path planner may generate occupancy information about an environment around a robot. The occupancy information represents defined volumes of space of the environment, and each defined volume of space is associated with a corresponding occupancy probability. The motion/path planner also determines a sequence of robot configurations between a starting and a target configuration based on the occupancy information, wherein the sequence of robot configurations defines poses of the robot that occupy selected ones of the defined volumes of space. The motion/path planner also generates an instruction for the robot based on the sequence of robot configurations, wherein the instruction includes trajectory information to control the robot to move from the starting configuration to the target configuration through the sequence of robot configurations.

## Description

### Technical Field

The disclosure relates generally to noise control in vehicles, and in particular, adaptive noise control that may take into account the vehicle's noise contribution to the environment and may take into account location-specific noise level requirements.

### Background

Noise pollution is becoming more prevalent, especially in environments where vehicles and other machines are operating. As the number of vehicles and machines, including autonomous vehicles, mobile robots, drones, etc., increase, so does the amount of noise in the environment. Recent studies in large cities indicate that noise in crowded environments have reached uncomfortably high levels, and many states, cities, municipalities, governments, businesses, etc. may have regulated or may begin regulating acceptable noise levels in certain areas and at certain times of the day/night. As the number of vehicles/robots in such environments increases, there is a possibility that the vehicles/robots contribute a level of noise to the environment such that the individual noise emissions or the overall noise level may exceed noise targets and/or regulations. For example, various types of robots may be operating autonomously in a wide variety of locations, ranging from city streets to hospital zones, to schools, to manufacturing facilities, etc. These robots may emit noise into the environment, for example by motors, cooling fans, computing devices, moving parts, j ob-specific noise, etc., and the extent of noise contribution to the environment may vary depending on the type of robot, type of task performed by the robot, and the deployment scenario.

### Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary aspects of the disclosure are described with reference to the following drawings, in which:
FIG. 1 shows an exemplary overview of a vehicle/robot that may employ a location-aware noise adaption system;
FIG. 2 illustrates an exemplary location-aware noise adaption system that may control operating parameters of a vehicle depending on the time/location in which it operates;
FIG. 3 depicts exemplary logical blocks and data blocks that may be utilized by a location-aware noise adaption system;
FIG. 4 illustrates an exemplary schematic drawing of a location-aware noise adaption system; and
FIG. 5 depicts an exemplary schematic flow diagram of a method for location-aware noise adaption.

### Description

The following detailed description refers to the accompanying drawings that show, by way of illustration, exemplary details and features.

The word "exemplary" is used herein to mean "serving as an example, instance, or illustration". Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (*e.g*., one, two, three, four, [...], etc., where "[...]" means that such a series may continue to any higher number). The phrase "at least one of' with regard to a group of elements may be used herein to mean at least one element from the group consisting of the elements. For example, the phrase "at least one of' with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (*e.g*., "plural [elements]", "multiple [elements]") referring to a quantity of elements expressly refers to more than one of the said elements. For instance, the phrase "a plurality" may be understood to include a numerical quantity greater than or equal to two (*e.g*., two, three, four, five, [...], etc., where "[...]" means that such a series may continue to any higher number).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, *e.g*., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, *e.g*., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (*e.g*., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPoint^{™}, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (*e.g*., the transmission of radio signals) and logical transmission (*e.g*., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

A "vehicle" may be understood to include any type of machinery that may be operated by software, including autonomous, partially autonomous, stationary, moving, or other objects or entities that utilize software as part of their operation. By way of example, a vehicle may be a driven object with a combustion engine, a reaction engine, an electrically driven object, a hybrid driven object, or a combination thereof. A vehicle may be or may include an automobile, a bus, a mini bus, a van, a truck, a mobile home, a vehicle trailer, a motorcycle, a bicycle, a tricycle, a train locomotive, a train wagon, a robot, a personal transporter, a boat, a ship, a submersible, a submarine, a drone, an aircraft, industrial machinery, autonomous or partially autonomous machinery, or a rocket, among others.

A "robot" may be understood to include any type of digitally controllable machine that is designed to perform a task or tasks. By way of example, a robot may be an autonomous mobile robot (AMR) that may move within an area (e.g., a manufacturing floor, an office building, a warehouse, etc.) to perform a task or tasks; or a robot may be understood as an automated machine with arms, tools, and/or sensors that may perform a task or tasks at a fixed location; or a combination thereof.

As machinery such as vehicles and robots become more prevalent, more autonomous, and more mobile, it becomes more likely that they may contribute more noise to the environment and at different times, at different noise levels, and in different locations, depending on the task, level of computational processing, temperature, etc. In order for a given location to comply with targeted or regulated noise level, the acceptable noise level emitted from a given robot/vehicle may vary significantly based on the location, time, and status of other active noise contributions in the environment. Thus, noise levels from autonomous and mobile vehicles/robots may be different from typical data center and fixed-location computing deployments, where noise contribution from each machine is relatively fixed. Current noise reduction methods for fixed-location computing fail to address, however, the dynamic nature of today's autonomous vehicles/robots. Moreover, simply minimizing the sound output from a vehicle/robot may not be feasible or may unsatisfactorily reduce the vehicle/robot's performance or make it impossible for the vehicle/robot to operate effectively in certain environments.

As discussed in more detail below, the disclosed location-aware noise adaption system may address problems with noise levels given the dynamic nature of today's environments, where vehicles, robots, and other machines may be operating autonomously and may contribute noise to the environment in continuously-changing ways. The disclosed location-aware noise adaption system may determine and conform the acoustic noise emission of a given vehicle/robot based on the what task it is performing, the required processing/activities it must perform, the location, the time of day, the other noises/noise sources in the environment, etc. The disclosed location-aware noise adaption system may identify the threshold noise levels allowed for a given location/time (e.g., the maximum decibel level of noise proscribed by a regulation, statute, rule, guideline, etc.; herein, this may be referred to as a service level agreement or "SLA").

The location-aware noise adaption system may monitor the noise contribution of each of the various components of a vehicle/robot (e.g., processing circuitry, engine/drivetrain, cooling fans, propellers, etc.) along with their related requirements (e.g., minimum processing power, minimum engine speed, required cooling, required propeller velocity, etc.) to optimize the noise level emitted by the vehicle/robot so that the overall threshold noise level for the environment may be satisfied. In this sense, the system may dynamically control the vehicle/robot's behavior in a noise-aware fashion to identify the components that are generating noise and control the behavior of those components to meet competing demands of both the robot (e.g., its tasks/objectives) and the environment (e.g., the permitted noise level and noise contribution of the vehicle/robot). In addition, to the extent the vehicle/robot is able to actively cancel noise, the system may generate noise with equal amplitude and opposite phasing as compared to noise which its other components are generating or compared to noise in the environment, in order to reduce/eliminate the noise contribution of the vehicle/robot or to reduce/eliminate the overall noise in the environment.

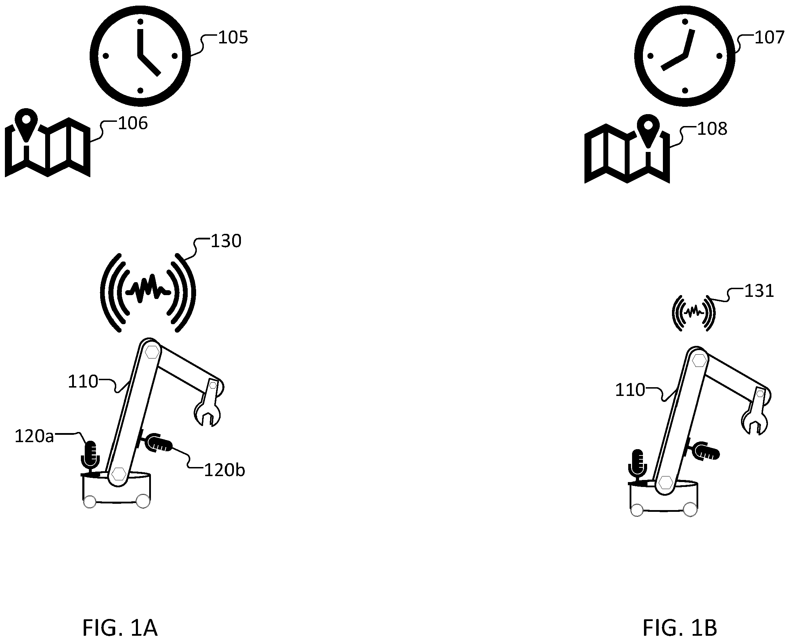

FIGs. 1A and 1B show a generalized overview of a vehicle/robot that may employ the location-aware noise adaption system disclosed herein. In FIG. 1A, for example, robot 110 may be equipped with noise sensors (e.g., noise sensors 120a, 120b) to detect noise levels in its environment, its noise emissions, and/or its component-specific noise emissions. The location-aware noise adaption system may, based on the overall noise requirements/targets for the location 106 of the robot 110 at the particular time 105, control the operating parameters of robot 110 so that the noise level 130 emitted by the robot 110 into the environment is at a level such that it does not exceed the requirements/targets for the permitted noise level at time 105 and at location 106. In FIG. 1B, robot 110 is at location 108 at time 107 that may be different from location 106 and/or time 105 of FIG. 1A. At location 108 and time 107 of FIG. 1B, the permitted noise level is lower than the permitted noise level at location 106 and time 105 of FIG. 1A. As such, the location-aware noise adaption system has determined a noise level 131 to be emitted by robot 110, where noise level 131 is lower than noise level 130 emitted at location 106 and/or time 105 of FIG. 1A. The lower noise level 131 ensures that noise emissions from robot 110 do not exceed the requirements/targets for the lower permitted noise level at location 108 and time 107 of FIG. 1B. The location-aware noise adaption system may adjust robot 110's travel speed, its cooling fan speed, the extent of its processing, the range of motion of its arm movements, the speed at which it performs its task, etc., in order to ensure that the noise emitted from robot 110 is at or below the lower noise level 131.

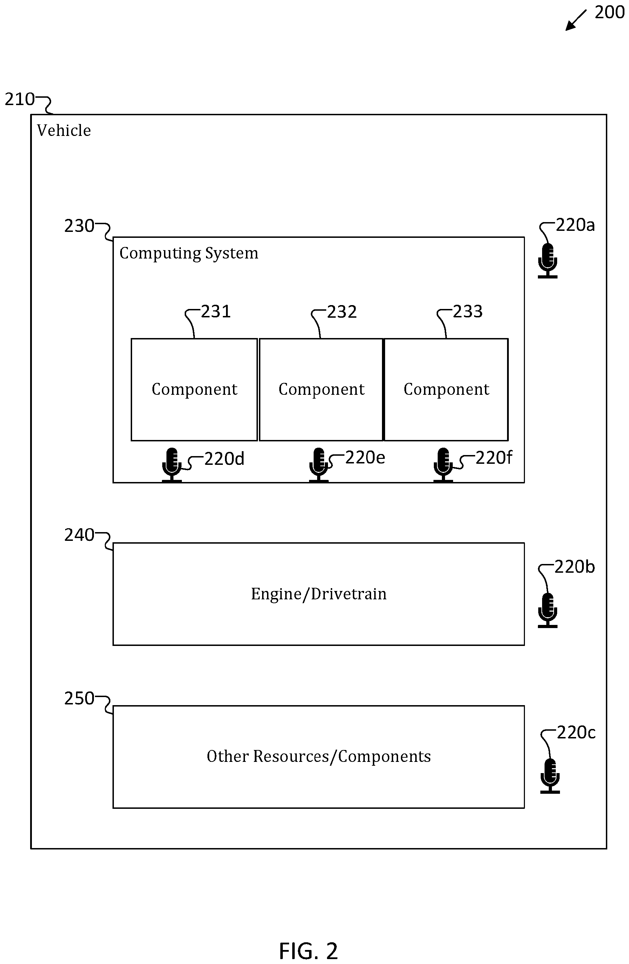

FIG. 2 shows an exemplary location-aware noise adaption system 200 that may be employed by vehicle 210 to control the operational parameters of vehicle 210 so that the noise levels emitted by the vehicle 210 conform to the noise level requirements for the time/location in which the vehicle 210 is operating or will be operating. For example, vehicle 210 may include a computing system 230 that includes several noise-contributing subcomponents (e.g., component 231, components 232, and component 233) such as active (e.g., fan) cooling systems for the memory circuitry, processing circuitry, amplifier circuitry, or other computing components. Each subcomponent may have a noise sensor at or near the subcomponent configured to measure the actual noise at the component.

For example, sound sensor 220d may be located at or near component 231 to measure the actual noise at component 231. Sound sensor 220e may be located at or near component 232 to measure the actual noise at component 232. Sound sensor 220f may be located at or near component 233 to measure the actual noise at component 233. As should be understood, there may be any number of subcomponents that make up the computing circuitry and the computing circuitry may be distributed throughout vehicle 210 or may be external to vehicle 210. Similarly, any number of sound sensors may be on vehicle 210, and each subcomponent need not have a sound sensor. Indeed, the sound sensors may be strategically placed on vehicle 210 as desired, in way, for example, that allows for efficiently and accurately localizing the source of noise emissions from vehicle 210. For example, sound sensor 220a may be placed near the three components 231, 232, and 232 and may be used as an alternative to or in addition to the sound sensors 220d, 200e, and/or 220f. For example, sound sensor 220a may be a directional sound sensor that may pinpoint which of and to what extent the three components 231, 232, and/or 232 may be contributing to the noise emission of computing system 230.

Vehicle 210 may include other systems that may contribute to the noise emissions of vehicle 210. For example, vehicle 210 may include an engine/drivetrain 240 (e.g., the motor, battery, axels, wheels, drone blades, etc.) that may contribute to the emitted noise levels, for example, when the vehicle 210 is moving, turning, idling, etc. As with the computing system 230, sensors may be placed at, near, and/or around subcomponents of the engine/drivetrain 240 so as to be able to pinpoint the source(s) that are contributing to the emitted noise levels (e.g., which subcomponent(s) and to what extent). In the example of FIG. 2, sound sensor 220b may monitor the engine/drivetrain 240 so as to be able to pinpoint the sound source(s) from engine/drivetrain 240 that may be contributing to the emitted noise levels. As another example, vehicle 210 may include other resources/components 250 that may contribute to the emitted noise levels, such as mechanical arms, a work tool that performs certain tasks, an audio/alarm system, etc., each of which may be associated with a sensor (e.g., sensor 220c) that may be able to determine which and to what extent the other resources/components 250 may be contributing to the emitted noise levels of the vehicle 210.

The location-aware noise adaption system 200 may utilize the noise levels measured at the various sound sensors to determine which components are likely contributing to the noise emissions of vehicle 210 and to what extent. Based on this determination, and based on the permissible noise level for the environment in which the vehicle 210 is operating or expected to be operating, the location-aware noise adaption system 200 may control the operating parameters of these systems so that the noise emitted by the vehicle 210 (together with the other noise in the environment that is not emitted by vehicle 210) stays within the permissible noise level. To do this, the location-aware noise adaption system 200 may utilize a stored set of rules that prioritizes the operation of various systems and subcomponents, where, for example, some systems may be identified as critical systems with a higher priority than auxiliary systems with a lower priority. For example, a navigation/safety system may have a higher priority than an audio system, and thus the location-aware noise adaption system 200 may, if possible, lower the computing power of the audio system (and therefore its noise output) before lowering the computing power of the navigation/safety system (and therefore its noise output). As should be understood, the rules may depend on the task of the vehicle 210; may depend on the current/planned operation of vehicle 210; may be specified as target ranges; may be defined at the vehicle-level, system level, or component level; may be grouped by function; etc.. As should be appreciated, the optimization of the rules may be based on an artificial intelligence (AI) algorithm, function, or other type of optimization tool (e.g., a rules engine) that determines how to tradeoff performance goals versus noise-reduction goals (e.g., relates an adjustment of the operating component to a change in the amount of noise contributed by the operating component.

As should be understood, the location-aware noise adaption system 200 may control the noise output in any number of ways that are permitted by the various noise-generating systems and subcomponents of vehicle 210, each of which may have a different type of performance tradeoff. For example, the cooling fan on a processor may be controlled to have a lower rotation per minute (RPM); a tradeoff, however, may be that the processor may need to be operated at a correspondingly lower temperature and therefore at slower processing speeds. An engine motor, for example, may be controlled to operate at a lower torque level; a tradeoff, however, may be that the vehicle 210 may have limited velocities, accelerations, or may be prevented from performing certain tasks. Control from the location-aware noise adaption system 200 to the systems/subcomponents of vehicle 210 may be communicated via control messages using any available communication protocol (e.g., wired or wireless).

Location-aware noise adaption system 200 may utilize noise level-based thresholds (e.g., an SLA) for the particular location and the particular time of the day (e.g., threshold noise levels set by municipalities, governments, building owners, businesses, etc.). If the noise level-based threshold is environmental (e.g., a general threshold for the total noise emitted at the location), the location-aware noise adaption system 200 may filter out ambient noise (e.g., noise emitted into the environment by sources other than vehicle 210) (e.g., using an environmental noise sensor that is onboard the vehicle 210 or on external to the vehicle (e.g., on infrastructure in the environment)) in order to determine the available noise budget for vehicle 210 (e.g., the amount of noise vehicle 210 is permitted to emit at the location and the particular time). If the noise level-based threshold is unit-based (e.g., a maximum noise emission permitted from a given vehicle ), the noise level-based threshold may itself be the available noise budget for vehicle 210 (e.g., the amount of noise vehicle 210 is permitted to emit at the location and the particular time).

To the extent vehicle 210 is capable of active noise cancellation, location-aware noise adaption system 200 may also trigger an active noise cancellation process of the vehicle 210 in order to reduce/eliminate the noise contribution of vehicle 210 and/or to reduce/eliminate the overall noise in the environment (e.g., to meet the noise level-based threshold(s) for the location at the particular time). The active noise cancellation process may generate noise with an amplitude (e.g., equal) and phasing (e.g., opposite) as compared to noise which vehicle 210 is generating or as compared to noise in the environment, in order to reduce/eliminate the noise contribution of vehicle 210 and/or to reduce/eliminate the overall noise in the environment. Active noise cancellation may allow vehicle 210 to meet its operational goals as well as the noise level-based threshold in the environment without having to reduce its performance.

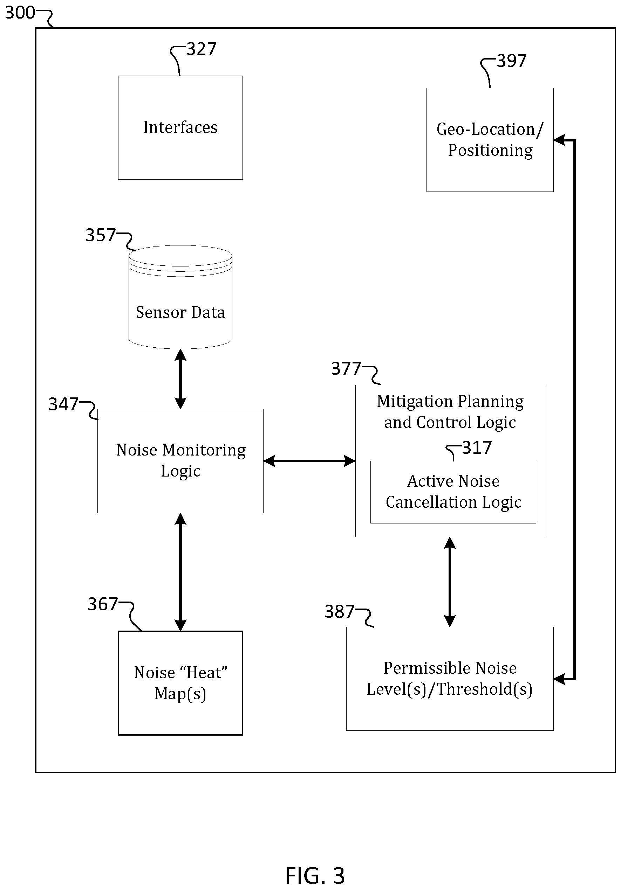

FIG. 3 shows an example of the various logical and data blocks that may be utilized by a location-aware noise adaption system 300 (e.g., location-aware noise adaption system 200 discussed above with respect to FIG. 2 and/or location-aware noise adaption system discussed above with respect to FIGs. 1A-1B). The various logical and data blocks discussed below have been organized into logical groups for ease of discussion, but it should be understood that the implementation need not have these groupings and their functionality may be distributed in any manner across the system, which may be co-located with the vehicle/robot, external to the vehicle/robot (e.g., operating on a edge-based or cloud-based server), and/or any combination thereof. Communication among the various logical and data blocks may be wired or wireless, and may utilize any type of communication protocol and/or messaging protocol (e.g., accessed via an application programming interface (API)). While various lines are shown in FIG. 3 to highlight communication of data between logical/data blocks, these are not meant to be limiting, and it should be understood that each of the logical/data blocks may share any type of data with any other of the logical/data blocks.

Location-aware noise adaption system 300 may include a number of interfaces (e.g. interfaces 327) for receiving, determining, and/or entering service level objectives (SLOs) of a vehicle (e.g., rules for how the operating parameters may be controlled), service level agreements (SLAs) for the environment (e.g., requirements/targets for noise level thresholds, globally, for a particular location, at a particular time, for a particular component, etc.), etc. For example, an API may be used that allows infrastructure owners (e.g., infrastructure devices that control noise-related operations of the environment) to configure the noise SLAs for a given vehicle. The noise SLA may include a list of locations (e.g., a geographic area) in which certain noise level thresholds must be satisfied. For each location in the list, there may be time period(s) in which the SLA is to be enforced. Each of these (e.g., each noise SLA for each location at each time) may include the particular noise-related criteria that is to be enforced. The noise-related criteria may be further broken down to the specific systems or subcomponents of the vehicle which contribute to the noise and/or which are associated with the various sound sensors on the vehicle (e.g., a proportional distribution of the vehicle noise budget to each component/system). The SLOs and SLAs may be associated with exception rules. For example, an exception rule may be defined for a particular noise sensor (or the specific systems or subcomponents of the vehicle) and associated with an equation/formula (e.g., a Boolean equation). For example, an exception may be based on an overall noise sensor (e.g., measuring the overall noise contribution by the vehicle), where if the overall noise sensor measures a higher than expected level, the SLA may need to be back-off to 80% of its current level.

Location-aware noise adaption system 300 may include an alarm/notification interface as part of the interfaces 327 for triggering, informing, and/or monitoring whether a noise-related threshold may have been or is close to being exceeded. For example, the alarm condition may be based on gradual notifications, where there may be various margins for how close the noise-related threshold is to being exceeded (e.g., the noise is at 30%, 50% or 90% of the threshold), and/or an absolute notification (e.g., when the noise exceeds the threshold). As should be understood, an alarm/notification interface may be optional and the notification may be vehicle-specific or environment specific, and may be sent to infrastructure/owners that may be responsible for monitoring the environment and/or controlling multiple vehicles in an environment. A software interaction interface may be responsible for generating interrupts to other interfaces (e.g., the software stack) to perform corresponding actions when an alarm is triggered (e.g., when the noise-related threshold is close to being exceeded) or to collect data from sensors or external sources (e.g., via a telemetry interface).

Location-aware noise adaption system 300 may include an interface (e.g. as part of interface 327) used by the software stack of the vehicle (e.g. an API for the operating system (OS) to register a call-back that may be used to notify that an action needs to be performed to mitigate a potential reboot). This may include a memory region to store the sensor data, SLOs, SLAs, mitigation proposals (described in more detail below), and any other data utilized by the location-aware noise adaption system 300. This may include a memory address (e.g., that can be monitored until used, e.g., "MWAIT") that may operate as a "doorbell." The location-aware noise adaption system 300 may include an interface (e.g. as part of interface 327) used by the software stack of the vehicle to provide a response on the mitigation strategy (e.g., respond to a request for active cooling throttling based on request to reduce the power pressure on a set of building blocks (e.g., a request for reduced processing).

Location-aware noise adaption system 300 may include a noise monitoring logic 347 that may obtain sensor data 357 and/or maintain the noise "heat" map 367 for the device/environment. The monitoring logic 347 may collect (e.g., via the telemetry interface or from local sensors) noise measurements over time from the noise sensors on the vehicle, in the environment, and/or from other sources and related data (e.g., thermal data, usage data, etc.) and may store it in in a memory (e.g., a database, a storage, etc.) as sensor data 357. With respect to the noise "heat" map 367, this may also be stored in a memory/database and may contain the current amount of noise for each of the sound sensors. It is called a "heat" map in the sense that, like a thermal scan that maps areas that are hotter or cooler in comparison with other areas, the noise "heat" map records noise of the particular regions (e.g., components/systems of the vehicle) of the vehicle such that noisier or quieter areas of the vehicle may be identified and, if necessary, the vehicle operationally adjusted (e.g., via an operating parameter) to bring the particular regions (e.g., components/systems and/or the vehicle as a whole) into compliance.

The noise "heat" map 367 may also be a global map of the environment, identifying the noise level recorded for particular geographic areas (e.g., the ambient noise) at particular times (e.g., including the total contribution of all vehicles in the area) . Such an environmental noise heat map (as opposed to a vehicle noise heat map) may be used by the location-aware noise adaption system 300 to assess the remaining noise budget (e.g., compared to the permissible noise level) for a given location/time and allocate all or a portion of the remaining noise budget to the vehicle or vehicles within or expected to be within that location/time. For example, if 10 vehicles are in the area, some may be required to operate at less-than-full capacity (e.g., lower noise levels) at certain times (e.g., a first set of 3 out of the 10 may execute at full capacity while the remainder operate at less-than-full capacity at a first time (T0); at a second time (T1), a different set of 3 out of the 10 may execute at full capacity while the remainder operate at less-than-full capacity; etc.); and/or select vehicles may be controlled to avoid certain areas at certain times. As should be understood, the sensor data may be collected by active or passive monitoring. Passive monitoring may utilize an interface wherein the sensor data is collected/provided if the certain noise thresholds (or a margin thereto) are reached. Active monitoring may utilize an interface where sensor data is collected/provided on a real-time, regular/irregular intervals, timed, and/or scheduled basis.

Location-aware noise adaption system 300 may include a mitigation planning and control logic 377 that may be responsible for arbitrating the SLOs and SLAs in order to determine what mitigation actions should be performed to bring the vehicle or environment into noise-compliance with the permissible threshold(s). As such, the mitigation planning and control logic 377 may receive permissible noise level(s)/threshold(s) 387 for the environment, for the vehicle, and/or for the individually-controllable components of the vehicle. Because the permissible noise level(s)/threshold(s) 387 may be specific to the environment and may be based on an actual or planned location of the vehicle, a geo-location/planning system 397 may provide the current or planned location of the vehicle. Based on this information, the mitigation planning and control logic 377 may determine mitigation actions (e.g., for controlling operating parameters of the vehicle(s)) based involve a stored set of rules that prioritizes the operation of various vehicles, systems, and subcomponents, where, for example, some vehicles and/or vehicle systems may be identified as critical systems with a higher priority than other vehicles/systems with a lower priority.

For example, a navigation/safety system in a vehicle may have a higher priority than an audio system in the vehicle, and thus the location-aware noise adaption system 300 may, if possible, lower the computing power of the audio system (and therefore its noise output) before lowering the computing power of the navigation/safety system (and therefore its noise output). As should be understood, the rules may depend on the task of the vehicle(s), the current/planned operation of vehicle(s), may be target ranges, may be defined at the environment-level, vehicle-level, system level, component level, may be grouped by function, etc. As should be appreciated, the mitigation planning and control logic 377 may optimize a solution based on an AI algorithm, function, or other type of optimization tool that determines how to tradeoff performance goals versus noise-reduction goals.

For example, the mitigation planning and control logic 377 may have access to the vehicle's noise "heat" map and compare it to the rules (e.g., the SLAs, SLOs, etc.). If the rules are not violated, the mitigation planning and control logic 377 does not need to make changes to the operational parameters of the vehicle. If the rules are violated, the mitigation planning and control logic 377 may identify and rank the sources of noise in the vehicle (e.g., from the noise monitoring logic 347) and correlate them with the service level objectives (e.g., ranked by criticality) for the adjustable operating parameters. Then, the mitigation planning and control logic 377 may create a plan for noise mitigation by, for example, identifying which operational parameters may be adjusted in order to cause a reduction in noise so as to satisfy the threshold noise level for the permissible level of emitted noise.

For example, the operating parameters associated with lower priority services may be reduced so as to reduce the noise output (e.g., a processor's operating level may be reduced so that the active cooling system may be reduced so as to reduce the noise output from the processors active cooling system). Once the vehicle implements the adjusted operating parameter, the location-aware noise adaption system 300 may continue to monitor (via the noise monitoring logic 347) to see if there is a sufficient reduction of the noise level so that the vehicle complies with the threshold level of permissible noise. If not, the location-aware noise adaption system 300 may request that mitigation planning and control logic 377 update the plan to further lower the noise level, whereby the mitigation planning and control logic 377 may further adjust the operating parameters (e.g., further adjusting the operating parameters of the low priority service(s) and/or by also adjusting the operating parameters of higher priority services) so as to further reduce the noise output. This process may continue until the noise level is sufficiently reduced to bring the vehicle/environment into compliance with the permissible noise level.

The mitigation planning and control logic 377 may include active noise cancellation logic 317 that analyzes the noise in the environment (e.g., the sensor data 357 and/or noise "heat" map(s) 367 from the noise monitoring logic 347) to determine noise cancellation parameters. For example, the noise cancellation logic 317 may include an AI algorithm that has been trained for the different categories of noises and levels to help determine the matching noise cancellation parameters. Once the noise cancellation logic 317 has determined appropriate noise cancellation parameters (e.g., the amplitude and phasing need for emitted sound waves to cancel the noise of the vehicle or environment), the mitigation planning and control logic 377 may control a noise generator to generate waves with the determined noise cancellation parameters.

As noted earlier, the noise control described above may be not only for a single vehicle but also for multiple vehicles in the environment, where the location-aware noise adaption system may control operating parameters of multiple vehicles in the environment (e.g., an infrastructure element that enforces noise-related rules for vehicles that enter its control space). The location-aware noise adaption system may estimate the noise level based on speed, requested movement, tasks, goals, planned trajectories, etc. for each of the vehicles in the environment and may allocate a portion of the permitted noise level budget to each vehicle. The location-aware noise adaption system may track each vehicle's usage of its allocated permitted noise level budget (e.g., noise credit tracking) and may update the noise budget allocation as vehicles enter/leave the environment or as vehicle's operation changes. The location-aware noise adaption system may coordinate tasks, routes, and movement planning based on the permitted noise level budget.

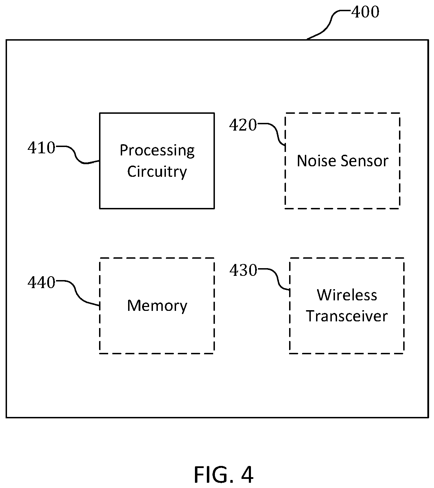

FIG. 4 is a schematic drawing illustrating a device 400 for location-aware noise adaption. The device 400 may include any of the features discussed above with respect to location-aware noise adaption systems discussed above (e.g., location-aware noise adaption system 200, 300) and any of FIGs. 1-3. FIG. 4 may be implemented as a device, a system, a method, and/or a computer readable medium that, when executed, performs the features of the location-aware noise adaption described above. It should be understood that device 400 is only an example, and other configurations may be possible that include, for example, different components or additional components.

Device 400 includes processing circuitry 410. Processing circuitry 410 of device 400 is configured to determine a noise level within an environment of a vehicle. Processing circuitry 410 is also configured to determine a permissible noise level allowed in the environment. The processing circuitry 410 is also configured to control an operational parameter of the vehicle that influences a vehicle noise level caused by operation of the vehicle, wherein the control is based on the noise level within the environment and the permissible noise level.

Furthermore, in addition to or in combination with any of the features described in this or the preceding paragraph with respect to device 400, processing circuitry 410 may be configured to determine the noise level within the environment based on a sensed noise level and the vehicle noise level caused by operation of the vehicle. Furthermore, in addition to or in combination with any of the features described in this or the preceding paragraph, processing circuitry 410 may be configured to estimate the vehicle noise level based on a function that relates a current mode of operation of the vehicle to the vehicle noise level. Furthermore, in addition to or in combination with any of the features described in this or the preceding paragraph, the function may be based on a plurality of operational modes and corresponding vehicle noise levels (e.g., in a lookup table). Furthermore, in addition to or in combination with any of the features described in this or the preceding paragraph, processing circuitry 410 may be further configured to determine the sensed noise level and/or the vehicle noise level based on one or more sensors on the vehicle and/or in the environment. Furthermore, in addition to or in combination with any of the features described in this or the preceding paragraph, the noise level within the environment may be based on a sensed noise level received from a noise sensor 420. Furthermore, in addition to or in combination with any of the features described in this or the preceding paragraph, device 400 may further include noise sensor 420.

Furthermore, in addition to or in combination with any of the features described in this or the preceding two paragraphs, device 400 may further include a wireless transceiver 430 configured to wirelessly receive the sensed noise value. Furthermore, in addition to or in combination with any of the features described in this or the preceding two paragraphs, the operational parameter may include at least one of a trajectory of the vehicle, a processing level of a processor of the vehicle, a fan speed of a fan of the vehicle, a velocity of the vehicle, an acceleration of the vehicle, or a noise cancellation output of the vehicle. Furthermore, in addition to or in combination with any of the features described in this or the preceding two paragraphs, the noise cancellation output may include an active noise cancelation (ANC) process of processing circuitry 410 that is configured to generate sound waves that have an equal amplitude and an opposite phasing to those of the vehicle noise level caused by operation of the vehicle. Furthermore, in addition to or in combination with any of the features described in this or the preceding two paragraphs, wherein the permissible noise level may be defined by a noise policy that associates a type of the environment, a task of the vehicle, and a time of day with the permissible noise level.

Furthermore, in addition to or in combination with any of the features described in this or the preceding three paragraphs with respect to device 400, wherein processing circuitry 410 is configured to store in memory 440 at least one of the noise level, the permissible noise level, the operating parameter, the vehicle noise level, or the noise policy. Furthermore, in addition to or in combination with any of the features described in this or the preceding three paragraphs, device 400 may further include memory 440. Furthermore, in addition to or in combination with any of the features described in this or the preceding three paragraphs, the noise level within the environment may based on a sensed noise level received from noise sensor 420. Furthermore, in addition to or in combination with any of the features described in this or the preceding three paragraphs, the noise sensor may be external to the vehicle and processing circuitry 410 may be configured to receive the sensed noise level via a wireless transceiver 430.

Furthermore, in addition to or in combination with any of the features described in this or the preceding four paragraphs with respect to device 400, the operational parameter may be associated with an operating component of the vehicle, wherein processing circuitry 410 configured to control the operational parameter may include processing circuitry 410 configured to limit the operating component to a threshold operational level, wherein the threshold operational level is based on an amount of noise contributed by the operating component to the environment. Furthermore, in addition to or in combination with any of the features described in this or the preceding four paragraphs, processing circuitry 410 may be configured to determine the amount of noise contributed by the operating component based on one or more sensors on the vehicle. Furthermore, in addition to or in combination with any of the features described in this or the preceding four paragraphs, processing circuitry 410 may be configured to determine the amount of noise contributed by the operating component based on a mode of operation of the operating component. Furthermore, in addition to or in combination with any of the features described in this or the preceding four paragraphs, the operating component may include at least one of: a computing resource of the vehicle, a cooling fan of the vehicle, a battery of the vehicle, a sensor of the vehicle, or a motor of the vehicle.

Furthermore, in addition to or in combination with any of the features described in this or the preceding five paragraphs with respect to device 400, processing circuitry 410 may be configured to limit the operation of the operating component to the threshold operational level based on a rules engine that relates an adjustment of the operating component to a change in the amount of noise contributed by the operating component. Furthermore, in addition to or in combination with any of the features described in this or the preceding five paragraphs, the operating component may include one of a plurality of components, wherein the rules engine includes a database of rules that define how the adjustment of the operating component relates to adjustments of other components of the plurality of components. Furthermore, in addition to or in combination with any of the features described in this or the preceding five paragraphs, the rules engine may include a database of rules that prioritizes the adjustment of the operating component based on a priority of a vehicle process that depends on the operating component. Furthermore, in addition to or in combination with any of the features described in this or the preceding five paragraphs, the vehicle process may include at least one of a battery cooling system, a vehicle navigation system, a vehicle sensor system, a vehicle safety system, or an automated driving system.

Furthermore, in addition to or in combination with any of the features described in this or the preceding six paragraphs with respect to device 400, the operating parameter may be associated with a service level agreement and a service level objective that define an operating range for the operating parameter. Furthermore, in addition to or in combination with any of the features described in this or the preceding six paragraphs, the noise level within the environment may include other noise levels contributed by other objects in the environment. Furthermore, in addition to or in combination with any of the features described in this or the preceding six paragraphs, processing circuitry 410 may be configured to receive the noise level within the environment from a database of noise levels contributed by objects in the environment. Furthermore, in addition to or in combination with any of the features described in this or the preceding six paragraphs, processing circuitry 410 may be configured to update the database with the vehicle noise level caused by operation of the vehicle.

Furthermore, in addition to or in combination with any of the features described in this or the preceding seven paragraphs with respect to device 400, the vehicle may include at least one of an autonomous vehicle, a semiautonomous vehicle, an autonomous robot, an autonomous mobile robot, or a drone. Furthermore, in addition to or in combination with any of the features described in this or the preceding seven paragraphs, the permissible noise level allowed in the environment may be based on a regulatory standard for the environment that provides a threshold level of noise permitted in the environment. Furthermore, in addition to or in combination with any of the features described in this or the preceding seven paragraphs, the permissible noise level allowed in the environment may be based on a geographic location of the environment. Furthermore, in addition to or in combination with any of the features described in this or the preceding seven paragraphs, the permissible noise level allowed in the environment may be based on a time of day of operation of the vehicle. Furthermore, in addition to or in combination with any of the features described in this or the preceding seven paragraphs, processing circuitry 410 may be further configured to determine the vehicle noise level based on a task of the vehicle.

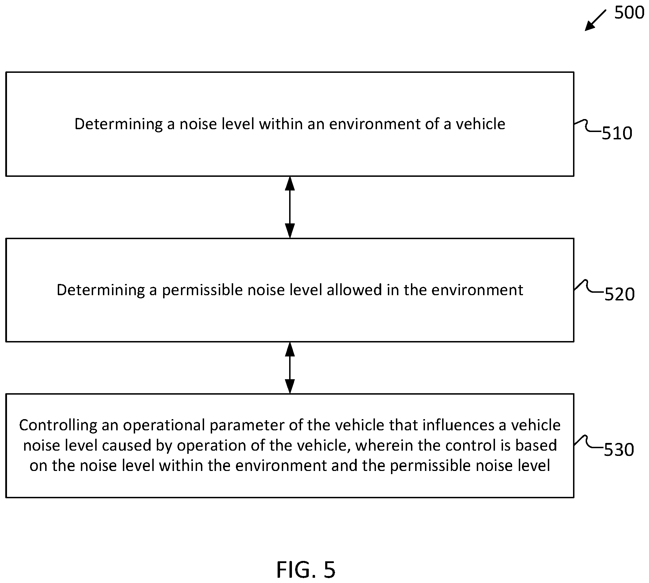

FIG. 5 depicts a schematic flow diagram of a method 500 for location-aware noise adaption. Method 500 may implement any of the features discussed above with respect to location-aware noise adaption systems discussed above (e.g., location-aware noise adaption system 200, 300 and device 400) and any of FIGs. 1-4. Method 500 includes, in 510, determining a noise level within an environment of a vehicle. Method 500 also includes, in 520, determining a permissible noise level allowed in the environment. Method 500 also includes, in 530, controlling an operational parameter of the vehicle that influences a vehicle noise level caused by operation of the vehicle, wherein the control is based on the noise level within the environment and the permissible noise level.

In the following, various examples are provided that may include one or more aspects described above with reference to the location-aware noise adaption systems discussed above (e.g., location-aware noise adaption system 200, 300 device 400, and method 500) and any of FIGs. 1-5. The examples provided in relation to the devices may apply also to the described method(s), and vice versa.

Example 1 is a device including processing circuitry coupled to storage, the processing circuitry configured to determine a noise level within an environment of a vehicle. The processing circuitry is also configured to determine a permissible noise level allowed in the environment. The processing circuitry is also configured to control an operational parameter of the vehicle that influences a vehicle noise level caused by operation of the vehicle, wherein the control is based on the noise level within the environment and the permissible noise level.

Example 2 is the device of example 1, wherein the processing circuitry is configured to determine the noise level within the environment based on a sensed noise level and the vehicle noise level caused by operation of the vehicle.

Example 3 is the device of example 2, wherein the processing circuitry is configured to estimate the vehicle noise level based on a function that relates a current mode of operation of the vehicle to the vehicle noise level.

Example 4 is the device of example 3, wherein the function is based on a plurality of operational modes and corresponding vehicle noise levels (e.g., in a lookup table).

Example 5 is the device of any one of examples 1 to 4, wherein the processing circuitry is further configured to determine the sensed noise level and/or the vehicle noise level based on one or more sensors on the vehicle and/or in the environment.

Example 6 is the device of any one of examples 1 to 5, wherein the noise level within the environment is based on a sensed noise level received from a noise sensor.

Example 7 is the device of example 6, wherein the device further includes the noise sensor.

Example 8 is the device of example 6, wherein the device further includes a wireless transceiver configured to wirelessly receive the sensed noise value.

Example 9 is the device of any one of examples 1 to 8, wherein the operational parameter includes at least one of a trajectory of the vehicle, a processing level of a processor of the vehicle, a fan speed of a fan of the vehicle, a velocity of the vehicle, an acceleration of the vehicle, or a noise cancellation output of the vehicle.

Example 10 is the device of example 9, wherein the noise cancellation output includes an active noise cancelation (ANC) process of the processing circuitry that is configured to generate sound waves that have an equal amplitude and an opposite phasing to those of the vehicle noise level caused by operation of the vehicle.

Example 11 is the device of any one of examples 1 to 10, wherein the permissible noise level is defined by a noise policy that associates a type of the environment, a task of the vehicle, and a time of day with the permissible noise level.

Example 12 is the device of any one of examples 1 to 11, wherein the processing circuitry is configured to store in a memory at least one of the noise level, the permissible noise level, the operating parameter, the vehicle noise level, or the noise policy.

Example 13 is the device of example 12, wherein the device further includes the memory.

Example 14 is the device of any one of examples 1 to 13, wherein the noise level within the environment is based on a sensed noise level received from a noise sensor.

Example 15 is the device of example 14, wherein the noise sensor is external to the vehicle and the processing circuitry is configured to receive the sensed noise level via a wireless transceiver.

Example 16 is the device of any one of examples 1 to 15, wherein the operational parameter is associated with an operating component of the vehicle, wherein the processing circuitry configured to control the operational parameter includes the processing circuitry configured to limit the operating component to a threshold operational level, wherein the threshold operational level is based on an amount of noise contributed by the operating component to the environment.

Example 17 is the device of example 16, wherein the processing circuitry is configured to determine the amount of noise contributed by the operating component based on one or more sensors on the vehicle.

Example 18 is the device of example 16, wherein the processing circuitry is configured to determine the amount of noise contributed by the operating component based on a mode of operation of the operating component.

Example 19 is the device of example 18, wherein the operating component includes at least one of: a computing resource of the vehicle, a cooling fan of the vehicle, a battery of the vehicle, a sensor of the vehicle, or a motor of the vehicle.

Example 20 is the device of example 19, wherein the processing circuitry is configured to limit the operation of the operating component to the threshold operational level based on a rules engine that relates an adjustment of the operating component to a change in the amount of noise contributed by the operating component.

Example 21 is the device of example 20, wherein the operating component includes one of a plurality of components, wherein the rules engine includes a database of rules that define how the adjustment of the operating component relates to adjustments of other components of the plurality of components.

Example 22 is the device of example 20, wherein the rules engine includes a database of rules that prioritizes the adjustment of the operating component based on a priority of a vehicle process that depends on the operating component.

Example 23 is the device of example 22, wherein the vehicle process includes at least one of a battery cooling system, a vehicle navigation system, a vehicle sensor system, a vehicle safety system, or an automated driving system.

Example 24 is the device of any one of examples 1 to 23, wherein the operating parameter is associated with a service level agreement and a service level objective that define an operating range for the operating parameter.

Example 25 is the device of any one of examples 1 to 24, wherein the noise level within the environment includes other noise levels contributed by other objects in the environment.

Example 26 is the device of any one of examples 1 to 25, wherein the processing circuitry is configured to receive the noise level within the environment from a database of noise levels contributed by objects in the environment.

Example 27 is the device of example 26, wherein the processing circuitry is configured to update the database with the vehicle noise level caused by operation of the vehicle.

Example 28 is the device of any one of examples 1 to 27, wherein the vehicle includes at least one of an autonomous vehicle, a semiautonomous vehicle, an autonomous robot, an autonomous mobile robot, or a drone.

Example 29 is the device of any one of examples 1 to 28, wherein the permissible noise level allowed in the environment is based on a regulatory standard for the environment that provides a threshold level of noise permitted in the environment.

Example 30 is the device of any one of examples 1 to 29, wherein the permissible noise level allowed in the environment is based on a geographic location of the environment.

Example 31 is the device of any one of examples 1 to 30, wherein the permissible noise level allowed in the environment is based on a time of day of operation of the vehicle.

Example 32 is the device of any one of examples 1 to 31, wherein the processing circuitry is further configured to determine the vehicle noise level based on a task of the vehicle.

Example 33 is a method including determining a noise level within an environment of a vehicle. The method also includes determining a permissible noise level allowed in the environment. The method also includes controlling an operational parameter of the vehicle that influences a vehicle noise level caused by operation of the vehicle, wherein the control is based on the noise level within the environment and the permissible noise level.

Example 34 is the method of example 33, wherein the method further includes determining the noise level within the environment based on a sensed noise level and the vehicle noise level caused by operation of the vehicle.

Example 35 is the method of example 34, wherein the method further includes estimating the vehicle noise level based on a function that relates a current mode of operation of the vehicle to the vehicle noise level.

Example 36 is the method of example 35, wherein the function is based on a plurality of operational modes and corresponding vehicle noise levels (e.g., in a lookup table).

Example 37 is the device of any one of examples 33 to 36, wherein the method further includes determining the sensed noise level and/or the vehicle noise level based on one or more sensors on the vehicle and/or in the environment.

Example 38 is the method of any one of examples 33 to 37, wherein the noise level within the environment is based on a sensed noise level received from a noise sensor.

Example 39 is the method of example 38, wherein the vehicle includes the noise sensor.

Example 40 is the method of example 38, wherein the vehicle includes a wireless transceiver configured to wirelessly receive the sensed noise value.

Example 41 is the method of any one of examples 33 to 40, wherein the operational parameter includes at least one of a trajectory of the vehicle, a processing level of a processor of the vehicle, a fan speed of a fan of the vehicle, a velocity of the vehicle, an acceleration of the vehicle, or a noise cancellation output of the vehicle.

Example 42 is the method of example 41, the method further including generating as the noise cancellation output, sound waves that have an equal amplitude and an opposite phasing to those of the vehicle noise level caused by operation of the vehicle.

Example 43 is the method of any one of examples 33 to 42, wherein the permissible noise level is defined by a noise policy that associates a type of the environment, a task of the vehicle, and a time of day with the permissible noise level.

Example 44 is the method of any one of examples 33 to 43, the method further including storing (e.g., in a memory) at least one of the noise level, the permissible noise level, the operating parameter, the vehicle noise level, or the noise policy.

Example 45 is the method of example 44, wherein the vehicle further includes the memory.

Example 46 is the method of any one of examples 33 to 45, wherein the noise level within the environment is based on a sensed noise level received from a noise sensor.

Example 47 is the method of example 46, wherein the noise sensor is external to the vehicle, wherein the method further includes receiving at the vehicle the sensed noise level via a wireless transceiver.

Example 48 is the method of any one of examples 33 to 47, wherein the operational parameter is associated with an operating component of the vehicle, wherein the controlling the operational parameter includes limiting the operating component to a threshold operational level, wherein the threshold operational level is based on an amount of noise contributed by the operating component to the environment.

Example 49 is the method of example 48, the method further including determining the amount of noise contributed by the operating component based on one or more sensors on the vehicle.

Example 50 is the method of example 48, the method further including determining the amount of noise contributed by the operating component based on a mode of operation of the operating component.

Example 51 is the method of example 50, wherein the operating component includes at least one of: a computing resource of the vehicle, a cooling fan of the vehicle, a battery of the vehicle, a sensor of the vehicle, or a motor of the vehicle.

Example 52 is the method of example 51, the method further including limiting the operation of the operating component to the threshold operational level based on a rules engine that relates an adjustment of the operating component to a change in the amount of noise contributed by the operating component.

Example 53 is the method of example 52, wherein the operating component includes one of a plurality of components, wherein the rules engine includes a database of rules that define how the adjustment of the operating component relates to adjustments of other components of the plurality of components.

Example 54 is the method of example 52, wherein the rules engine includes a database of rules that prioritizes the adjustment of the operating component based on a priority of a vehicle process that depends on the operating component.

Example 55 is the method of example 54, wherein the vehicle process includes at least one of a battery cooling system, a vehicle navigation system, a vehicle sensor system, a vehicle safety system, or an automated driving system.

Example 56 is the method of any one of examples 33 to 55, wherein the operating parameter is associated with a service level agreement and a service level objective that define an operating range for the operating parameter.

Example 57 is the method of any one of examples 33 to 56, wherein the noise level within the environment includes other noise levels contributed by other objects in the environment.

Example 58 is the method of any one of examples 33 to 57, wherein the method further includes receiving the noise level within the environment from a database of noise levels contributed by objects in the environment.

Example 59 is the method of example 58, wherein the method further includes updating the database with the vehicle noise level caused by operation of the vehicle.

Example 60 is the method of any one of examples 33 to 59, wherein the vehicle includes at least one of an autonomous vehicle, a semiautonomous vehicle, an autonomous robot, an autonomous mobile robot, or a drone.

Example 61 is the method of any one of examples 33 to 60, wherein the permissible noise level allowed in the environment is based on a regulatory standard for the environment that provides a threshold level of noise permitted in the environment.

Example 62 is the method of any one of examples 33 to 61, wherein the permissible noise level allowed in the environment is based on a geographic location of the environment.

Example 63 is the method of any one of examples 33 to 62, wherein the permissible noise level allowed in the environment is based on a time of day of operation of the vehicle.

Example 64 is the method of any one of examples 33 to 63, wherein the method further includes determining the vehicle noise level based on a task of the vehicle.

Example 65 is an apparatus including a means for determining a noise level within an environment of a vehicle. The apparatus also includes a means for determining a permissible noise level allowed in the environment. The apparatus also includes a means for controlling an operational parameter of the vehicle that influences a vehicle noise level caused by operation of the vehicle, wherein the control is based on the noise level within the environment and the permissible noise level.

Example 66 is the apparatus of example 65, wherein the apparatus further includes a means for determining the noise level within the environment based on a sensed noise level and the vehicle noise level caused by operation of the vehicle.

Example 67 is the apparatus of example 66, wherein the apparatus further includes a means for estimating the vehicle noise level based on a function that relates a current mode of operation of the vehicle to the vehicle noise level.

Example 68 is the apparatus of example 67, wherein the function is based on a plurality of operational modes and corresponding vehicle noise levels (e.g., in a lookup table).

Example 69 is the apparatus of any one of examples 65 to 68, wherein the apparatus further includes a means for determining the sensed noise level and/or the vehicle noise level based on one or more sensors on the vehicle and/or in the environment.

Example 70 is the apparatus of any one of examples 65 to 69, wherein the noise level within the environment is based on a sensed noise level received from a means for sensing noise (e.g., a noise sensor).

Example 71 is the apparatus of example 70, wherein the vehicle includes the means for sensing noise.

Example 72 is the apparatus of example 70, wherein the vehicle includes a means for wirelessly receiving (e.g., a wireless transceiver) the sensed noise value.

Example 73 is the apparatus of any one of examples 65 to 72, wherein the operational parameter includes at least one of a trajectory of the vehicle, a processing level of a processor of the vehicle, a fan speed of a fan of the vehicle, a velocity of the vehicle, an acceleration of the vehicle, or a noise cancellation output of the vehicle.

Example 74 is the apparatus of example 73, the apparatus further including a means for generating as the noise cancellation output, sound waves that have an equal amplitude and an opposite phasing to those of the vehicle noise level caused by operation of the vehicle.

Example 75 is the apparatus of any one of examples 65 to 74, wherein the permissible noise level is defined by a noise policy that associates a type of the environment, a task of the vehicle, and a time of day with the permissible noise level.

Example 76 is the apparatus of any one of examples 65 to 75, the apparatus further including a means for storing (e.g., a memory/database) at least one of the noise level, the permissible noise level, the operating parameter, the vehicle noise level, or the noise policy.

Example 77 is the apparatus of example 76, wherein the vehicle further includes the means for storing.

Example 78 is the apparatus of any one of examples 65 to 77, wherein the noise level within the environment is based on a sensed noise level received from a means for sensing noise.

Example 79 is the apparatus of example 78, wherein the means for sensing noise is external to the vehicle, wherein the apparatus further includes a means for receiving at the vehicle the sensed noise level via a receiving means (e.g., a wireless transceiver).

Example 80 is the apparatus of any one of examples 65 to 79, wherein the operational parameter is associated with an operating component of the vehicle, wherein the means for controlling the operational parameter includes a means for limiting the operating component to a threshold operational level, wherein the threshold operational level is based on an amount of noise contributed by the operating component to the environment.

Example 81 is the apparatus of example 80, the apparatus further including a means for determining the amount of noise contributed by the operating component based on one or more sensors on the vehicle.

Example 82 is the apparatus of example 80, the apparatus further including a means for determining the amount of noise contributed by the operating component based on a mode of operation of the operating component.

Example 83 is the apparatus of example 82, wherein the operating component includes at least one of: a computing resource of the vehicle, a cooling fan of the vehicle, a battery of the vehicle, a sensor of the vehicle, or a motor of the vehicle.

Example 84 is the apparatus of example 83, the apparatus further including a means for limiting the operation of the operating component to the threshold operational level based on a rules engine that relates an adjustment of the operating component to a change in the amount of noise contributed by the operating component.

Example 85 is the apparatus of example 84, wherein the operating component includes one of a plurality of components, wherein the rules engine includes a database of rules that define how the adjustment of the operating component relates to adjustments of other components of the plurality of components.

Example 86 is the apparatus of example 84, wherein the rules engine includes a database of rules that prioritizes the adjustment of the operating component based on a priority of a vehicle process that depends on the operating component.

Example 87 is the apparatus of example 86, wherein the vehicle process includes at least one of a battery cooling system, a vehicle navigation system, a vehicle sensor system, a vehicle safety system, or an automated driving system.

Example 88 is the apparatus of any one of examples 65 to 87, wherein the operating parameter is associated with a service level agreement and a service level objective that define an operating range for the operating parameter.

Example 89 is the apparatus of any one of examples 65 to 88, wherein the noise level within the environment includes other noise levels contributed by other objects in the environment.

Example 90 is the apparatus of any one of examples 65 to 89, wherein the apparatus further includes a means for receiving the noise level within the environment from a database of noise levels contributed by objects in the environment.

Example 91 is the apparatus of example 90, wherein the apparatus further includes a means for updating the database with the vehicle noise level caused by operation of the vehicle.

Example 92 is the apparatus of any one of examples 65 to 91, wherein the vehicle includes at least one of an autonomous vehicle, a semiautonomous vehicle, an autonomous robot, an autonomous mobile robot, or a drone.

Example 93 is the apparatus of any one of examples 65 to 92, wherein the permissible noise level allowed in the environment is based on a regulatory standard for the environment that provides a threshold level of noise permitted in the environment.

Example 94 is the apparatus of any one of examples 65 to 93, wherein the permissible noise level allowed in the environment is based on a geographic location of the environment.

Example 95 is the apparatus of any one of examples 65 to 94, wherein the permissible noise level allowed in the environment is based on a time of day of operation of the vehicle.

Example 96 is the apparatus of any one of examples 65 to 95, wherein the apparatus comprises a means for determining the vehicle noise level based on a task of the vehicle.

Example 97 is a non-transitory computer-readable medium that includes instructions which, if executed, cause one or more processors to determine a noise level within an environment of a vehicle. The instructions also cause the one or more processors to determine a permissible noise level allowed in the environment. The instructions also cause the one or more processors to control an operational parameter of the vehicle that influences a vehicle noise level caused by operation of the vehicle, wherein the control is based on the noise level within the environment and the permissible noise level.

Example 98 is the device of example 97, wherein the instructions also cause the one or more processors to determine the noise level within the environment based on a sensed noise level and the vehicle noise level caused by operation of the vehicle.

Example 99 is the device of example 98, wherein the instructions also cause the one or more processors to estimate the vehicle noise level based on a function that relates a current mode of operation of the vehicle to the vehicle noise level.

Example 100 is the device of example 99, wherein the function is based on a plurality of operational modes and corresponding vehicle noise levels (e.g., in a lookup table).

Example 101 is the device of any one of examples 97 to 100, wherein the instructions also cause the one or more processors to determine the sensed noise level and/or the vehicle noise level based on one or more sensors on the vehicle and/or in the environment.

Example 102 is the device of any one of examples 97 to 101, wherein the noise level within the environment is based on a sensed noise level received from a noise sensor.

Example 103 is the device of example 102, wherein the non-transitory computer-readable medium further includes the noise sensor.

Example 104 is the device of example 102, wherein the non-transitory computer-readable medium further includes a wireless transceiver configured to wirelessly receive the sensed noise value.

Example 105 is the device of any one of examples 97 to 104, wherein the operational parameter includes at least one of a trajectory of the vehicle, a processing level of a processor of the vehicle, a fan speed of a fan of the vehicle, a velocity of the vehicle, an acceleration of the vehicle, or a noise cancellation output of the vehicle.

Example 106 is the device of example 105, wherein instructions further cause the one or more processors to generate, as the noise cancellation output, sound waves that have an equal amplitude and an opposite phasing to those of the vehicle noise level caused by operation of the vehicle.

Example 107 is the device of any one of examples 97 to 106, wherein the permissible noise level is defined by a noise policy that associates a type of the environment, a task of the vehicle, and a time of day with the permissible noise level.

Example 108 is the device of any one of examples 97 to 107, wherein the instructions further cause the one or more processors to store in a memory at least one of the noise level, the permissible noise level, the operating parameter, the vehicle noise level, or the noise policy.

Example 109 is the device of example 108, wherein the non-transitory computer-readable medium further includes the memory.

Example 110 is the device of any one of examples 97 to 109, wherein the noise level within the environment is based on a sensed noise level received from a noise sensor.

Example 111 is the device of example 110, wherein the noise sensor is external to the vehicle and the instructions further cause the one or more processors to receive at the non-transitory computer-readable medium the sensed noise level via a wireless transceiver.

Example 112 is the device of any one of examples 97 to 111, wherein the operational parameter is associated with an operating component of the vehicle, wherein the instructions that cause the one or more processors to control the operational parameter includes that instructions further cause the one or more processors to limit the operating component to a threshold operational level, wherein the threshold operational level is based on an amount of noise contributed by the operating component to the environment.

Example 113 is the device of example 112, wherein the instructions further cause the one or more processors to determine the amount of noise contributed by the operating component based on one or more sensors on the vehicle.

Example 114 is the device of example 112, wherein the instructions further cause the one or more processors to determine the amount of noise contributed by the operating component based on a mode of operation of the operating component.

Example 115 is the device of example 114, wherein the operating component includes at least one of: a computing resource of the vehicle, a cooling fan of the vehicle, a battery of the vehicle, a sensor of the vehicle, or a motor of the vehicle.

Example 116 is the device of example 115, wherein the instructions further cause the one or more processors to limit the operation of the operating component to the threshold operational level based on a rules engine that relates an adjustment of the operating component to a change in the amount of noise contributed by the operating component.

Example 117 is the device of example 116, wherein the operating component includes one of a plurality of components, wherein the rules engine includes a database of rules that define how the adjustment of the operating component relates to adjustments of other components of the plurality of components.

Example 118 is the device of example 116, wherein the rules engine includes a database of rules that prioritizes the adjustment of the operating component based on a priority of a vehicle process that depends on the operating component.

Example 119 is the device of example 118, wherein the vehicle process includes at least one of a battery cooling system, a vehicle navigation system, a vehicle sensor system, a vehicle safety system, or an automated driving system.

Example 120 is the device of any one of examples 97 to 119, wherein the operating parameter is associated with a service level agreement and a service level objective that define an operating range for the operating parameter.

Example 121 is the device of any one of examples 97 to 120, wherein the noise level within the environment includes other noise levels contributed by other objects in the environment.

Example 122 is the device of any one of examples 97 to 121, wherein the instructions further cause the one or more processors to receive the noise level within the environment from a database of noise levels contributed by objects in the environment.

Example 123 is the device of example 122, wherein the instructions further cause the one or more processors to update the database with the vehicle noise level caused by operation of the vehicle.

Example 124 is the device of any one of examples 97 to 123, wherein the vehicle includes at least one of an autonomous vehicle, a semiautonomous vehicle, an autonomous robot, an autonomous mobile robot, or a drone.

Example 125 is the device of any one of examples 97 to 124, wherein the permissible noise level allowed in the environment is based on a regulatory standard for the environment that provides a threshold level of noise permitted in the environment.

Example 126 is the device of any one of examples 97 to 125, wherein the permissible noise level allowed in the environment is based on a geographic location of the environment.

Example 127 is the device of any one of examples 97 to 126, wherein the permissible noise level allowed in the environment is based on a time of day of operation of the vehicle.

Example 128 is the device of any one of examples 97 to 127, wherein the instructions further cause the one or more processors to determine the vehicle noise level based on a task of the vehicle.

While the disclosure has been particularly shown and described with reference to specific aspects, it should be understood by those skilled in the art that various changes in form and detail may be made therein without departing from the spirit and scope of the disclosure as defined by the appended claims. The scope of the disclosure is thus indicated by the appended claims and all changes, which come within the meaning and range of equivalency of the claims, are therefore intended to be embraced.

## Claims

1. A device comprising processing circuitry coupled to storage, the processing circuitry configured to:
determine a noise level within an environment of a vehicle;
determine a permissible noise level allowed in the environment; and
control an operational parameter of the vehicle that influences a vehicle noise level caused by operation of the vehicle, wherein the control is based on the noise level within the environment and the permissible noise level.

2. The device of claim 1, wherein the processing circuitry is further configured to determine the noise level within the environment based on a sensed noise level and the vehicle noise level caused by operation of the vehicle.

3. The device of claim 2, wherein the processing circuitry is further configured to estimate the vehicle noise level based on a function that relates a current mode of operation of the vehicle to the vehicle noise level, wherein the function is based on a plurality of operational modes and corresponding vehicle noise levels.

4. The device of either of claims 2 or 3, wherein the processing circuitry is further configured to determine the sensed noise level and/or the vehicle noise level based on one or more sensors on the vehicle and/or in the environment.

5. The device of any one of claims 1 to 4, wherein the operational parameter comprises at least one of a trajectory of the vehicle, a processing level of a processor of the vehicle, a fan speed of a fan of the vehicle, a velocity of the vehicle, an acceleration of the vehicle, or a noise cancellation output of the vehicle.

6. The device of claim 5, wherein the noise cancellation output comprises an active noise cancelation (ANC) process of the processing circuitry that is configured to generate sound waves that have an equal amplitude and an opposite phasing to those of the vehicle noise level caused by operation of the vehicle.

7. The device of any one of claims 1 to 6, wherein the permissible noise level is defined by a noise policy that associates a type of the environment, a task of the vehicle, and a time of day with the permissible noise level.

8. The device of any one of claims 1 to 7, wherein the operational parameter is associated with an operating component of the vehicle, wherein the processing circuitry configured to control the operational parameter comprises the processing circuitry configured to limit the operating component to a threshold operational level, wherein the threshold operational level is based on an amount of noise contributed by the operating component.

9. The device of claim 8, wherein the processing circuitry is further configured to determine the amount of noise contributed by the operating component based on one or more sensors on the vehicle and/or based on a mode of operation of the operating component, wherein the operating component comprises at least one of: a computing resource of the vehicle, a cooling fan of the vehicle, a battery of the vehicle, a sensor of the vehicle, or a motor of the vehicle.

10. The device of claim 9, wherein the processing circuitry is further configured to limit the operation of the operating component to the threshold operational level based on a rules engine that relates an adjustment of the operating component to a change in the amount of noise contributed by the operating component.

11. The device of claim 10, wherein the operating component comprises one of a plurality of components, wherein the rules engine comprises a database of rules that define how the adjustment of the operating component relates to adjustments of other components of the plurality of components, wherein the database of rules prioritizes the adjustment of the operating component based on a priority of a vehicle process that depends on the operating component.

12. The device of any one of claims 1 to 11, wherein the processing circuitry is further configured to receive the noise level within the environment from a database of noise levels contributed by objects in the environment, wherein the processing circuitry is further configured to update the database with the vehicle noise level caused by operation of the vehicle.

13. The device of any one of claims 1 to 12, wherein the permissible noise level allowed in the environment is based on a geographic location of the environment and/or a time of day of operation of the vehicle.

14. The device of any one of claims 1 to 13, wherein the processing circuitry is further configured to determine the vehicle noise level based on a task of the vehicle.

15. A non-transitory computer-readable medium comprising instructions which, if executed, cause one or more processors to:
determine a noise level within an environment of a vehicle;
determine a permissible noise level allowed in the environment;
control an operational parameter of the vehicle that influences a vehicle noise level caused by operation of the vehicle, wherein the control is based on the noise level within the environment and the permissible noise level.
